# EUROPEAN PATENT SPECIFICATION

(11) **EP 2 589 521 B1**
(45) Date of publication and mention of the grant of the patent: **24.02.2021**
(21) Application number: 12188760.8
(22) Date of filing: 17.10.2012
(51) Int. Cl.: B60W 30/18, B60W 50/00, B60W 10/10, B60W 10/22, B60W 10/12

(54) **METHOD AND SYSTEM FOR IMPROVING THE OPERABILITY OF A MOTOR VEHICLE**
VERFAHREN UND SYSTEM ZUR VERBESSERUNG DER BEDIENBARKEIT EINES KRAFTFAHRZEUGS
PROCÉDÉ ET SYSTÈME D'AMÉLIORATION DE LA MANOEUVRABILITÉ D'UN VÉHICULE À MOTEUR

(30) Priority: 02.11.2011 SE 1151022
(43) Date of publication of application: 08.05.2013
(73) Proprietor: Scania CV AB, 151 87 Södertälje (SE)
(72) Inventor: Backlund, Tomas, 151 46 Södertälje (SE)
(74) Representative: Scania CV AB

(56) References cited:
- EP-A1- 2 322 903
- DE-A1- 10 007 357
- DE-A1-102010 056 001
- US-A1- 2010 131 122
- US-A1- 2011 054 768

## Description

### TECHNICAL FIELD

The invention relates to a method for improving the operability of a motor vehicle. The invention relates also to a system for improving the operability of a motor vehicle. The invention relates also to a motor vehicle.

### BACKGROUND

A problem when driving vehicles such as heavy trucks on hilly slippery roads is that they may have difficulty in climbing, and hence risk becoming stuck on, hills. This may lead to queues and in certain cases prevent other traffic from passing. Skid control is also hampered when such a vehicle becomes stuck on a hill, thereby blocking the road.

To improve their operability, vehicles are equipped with driving power enhancement units which improve their driving power so that their operability on hills is improved. Such driving power enhancement units involve load transfer from tag axles to driveshafts and/or differential locks. Operability on hills may also be improved by adopting in hill driving a correct gear which can be maintained for the whole length of a hill so that no gear changes are required on the hill.

Such measures depend on driver experience and are sometimes not sufficient to enable the vehicle to climb a hill at times when the road is slippery, i.e. when there is little friction between vehicle and carriageway.

Examples of prior art are:
Document DE 10007357 A1 (Volkswagen AG) shows a system for increasing the comfort of a driver by tuning the air-suspension to meet an upcoming bump or curve. However, in this document, there are no measures taken to enable reduction of a risk of the vehicle becoming stuck on a hill.
Document US 2010/131122 A1 (Dersjoe Jan et al) relates to improvement of fuel consumption for a work machine. The work machine is working in off road conditions. Hence, there is no itinerary for the vehicle. The work machine needs to learn where there are steep uphills and the like.

Further prior art is known from US2011/054768 A1, EP 2 322 903 A1 and DE 10 2010 056001 A1.

### OBJECT OF THE INVENTION

One object of the present invention is to propose a method for improving the operability of a motor vehicle in order to make it possible to reduce risk of its becoming stuck on a hill.

A further object of the present invention is to propose a system for improving the operability of a motor vehicle in order to make it possible to reduce risk of its becoming stuck on a hill.

### SUMMARY OF THE INVENTION

These and other objects indicated by the description set out below are achieved by a method, a system and a motor vehicle of the kind indicated in the introduction which further present the features indicated in the characterising part of the attached independent claims. Preferred embodiments of the method and the system are defined in the attached dependent claims.

According to the invention, the object is achieved with a method for improving the operability of a motor vehicle, comprising the step of determining the vehicle's location and itinerary, comprising the following steps: determining the topography along said itinerary; using available information about carriageway state along said itinerary to assess operability conditions along said itinerary; using available facilities for improving the vehicle's operability to decide about its potential operability on the basis of information about said topography and carriageway state. Improved operability of the vehicle is thus made possible by being able to adopt suitable measures before the vehicle reaches a hill, in order to make it easier for the vehicle to climb the hill or in order to prevent it attempting to climb it, thus substantially reducing the risk that it might fail to do so and might thereby block the road to other vehicles. Improved operability of the vehicle is also made possible by being able to adopt suitable measures before it begins a downhill run, e.g. so that it maintains a suitable speed before the hill such that no unnecessary braking will be required on the hill.

According to the method, said available facilities for improving the vehicle's operability comprise measures to improve the friction at its contact with the carriageway before the vehicle reaches the hill. This makes it possible to improve the vehicle's operability before reaching a hill, irrespective of whether it is about to travel uphill and/or downhill.

Further, according to the method, said measures for improving the friction at the vehicle's contact with the carriageway comprise one or more of the following: load redistribution, differential locking, gearing adaptation of the vehicle's propulsion. These measures make good operability possible before reaching a hill, allowing optimisation of driving by adopting the most suitable measures for the particular situation.

According to an embodiment of the method, said carriageway state comprises parameters which affect friction at the vehicle's contact with the carriageway. The provision of information about friction between vehicle and carriageway makes it possible to adopt friction enhancement measures to facilitate the vehicle's operability before reaching a hill.

According to an embodiment of the method, said information about said topography comprises the gradients and/or length of sloping portions of the carriageway along the vehicle's itinerary. Improved operability of the vehicle on hills is thus facilitated in that suitable measures may be adopted, e.g. speed adaptation and improved friction at the vehicle's contact with the carriageway, before it reaches the hill, to make it easier for it to climb the hill or to prevent its attempting to climb it, depending on the gradient and/or length of the hill, thereby substantially reducing the risk of its failing to do so and hence blocking the road to other vehicles.

According to the invention, the object is achieved with a system for improving the operability of a motor vehicle, comprising the step of determining the vehicle's location and itinerary, comprising means for determining the topography along said itinerary; means for using available information about carriageway state along said itinerary to assess operability conditions along said itinerary; means for using available facilities for improving the vehicle's operability to decide about its potential operability on the basis of information about said topography and carriageway state. Improved operability of the vehicle is thus made possible by being able to adopt suitable measures before the vehicle reaches a hill, in order to make it easier for the vehicle to climb the hill or in order to prevent its attempting to climb it, thus substantially reducing the risk that it might fail to do so and might thereby block the road to other vehicles. Improved operability of the vehicle is also made possible by being able to adopt suitable measures before it begins a downhill run, e.g. so that it maintains a suitable speed before the hill such that no unnecessary braking will be required on the hill.

According to the system, said available facilities for improving the vehicle's operability comprise measures to improve the friction at its contact with the carriageway before the vehicle reaches the hill. This makes it possible to improve the vehicle's operability before reaching a hill.

Further, according to the system, said measures for improving the friction at the vehicle's contact with the carriageway comprise one or more of the following: load transfer means, differential lock means, means for gearing adaptation of the vehicle's propulsion. These measures make good operability possible before reaching a hill, allowing optimisation of driving by adopting the most suitable measures for the particular situation.

According to an embodiment of the system, said carriageway state comprises parameters which affect friction at the vehicle's contact with the carriageway. The provision of information about friction between vehicle and carriageway makes it possible to adopt friction enhancement measures to facilitate the vehicle's operability before reaching a hill, irrespective of whether it is about to travel uphill and/or downhill.

According to an embodiment of the system, said information about said topography comprises the gradients and/or length of sloping portions of the carriageway along the vehicle's itinerary. Improved operability of the vehicle on hills is thus facilitated in that suitable measures may be adopted, e.g. speed adaptation and improved friction at the vehicle's contact with the carriageway, before it reaches the hill, to make it easier for it to climb the hill or to prevent its attempting to climb it, depending on the gradient and/or length of the hill, thereby substantially reducing the risk of its failing to do so and hence blocking the road to other vehicles.

### DESCRIPTION OF DRAWINGS

The present invention will be better understood by reading the detailed description set out below in conjunction with the attached drawings, in which the same reference notations pertain to the same items throughout the various views, and
Fig. 1 is a schematic sideview of a motor vehicle,
Fig. 2 is a schematic block diagram of a system for improving the operability of a motor vehicle according to an embodiment of the present invention, and
Fig. 3 is a schematic block diagram of a method for improving the operability of a motor vehicle according to an embodiment of the present invention,

### DESCRIPTION OF EMBODIMENTS

The term "link" refers herein to a communication link which may be a physical line, e.g. an opto-electronic communication line, or a non-physical line such as a wireless connection, e.g. a radio link or microwave link.

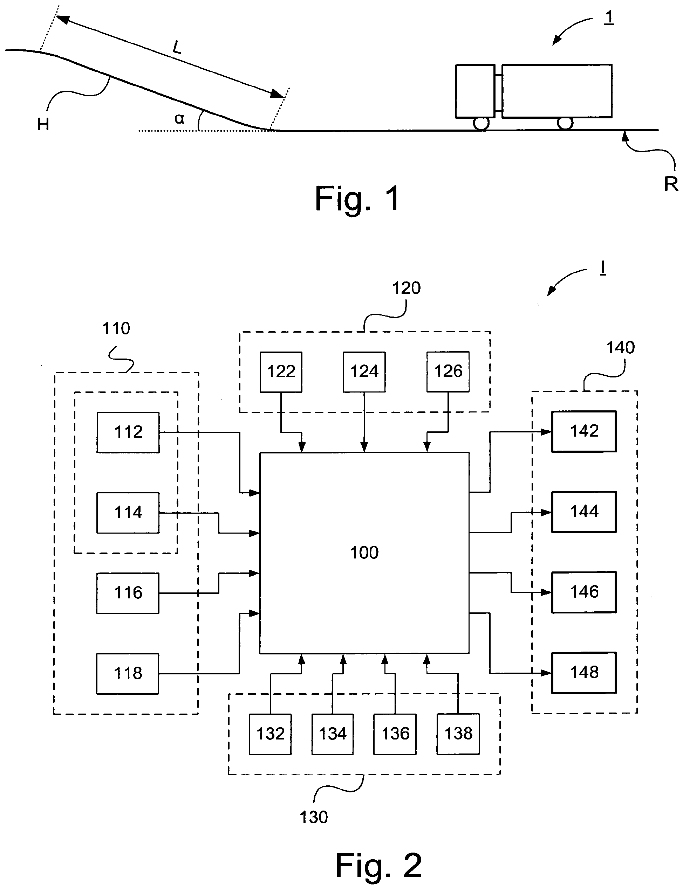

Fig. 1 depicts a side view of a vehicle 1. The vehicle here exemplified is a heavy vehicle in the form of a truck. It might alternatively be a bus or a car. The vehicle is provided with a system for improving the operability of a motor vehicle according to the present invention. The vehicle is provided with a system which makes it possible to reduce the risk, when travelling along an itinerary/carriageway R, of becoming stuck on a hill H which has a gradient of a certain angle α and a certain length L.

Fig. 2 is a schematic block diagram of a system I for improving the operability of a motor vehicle according to an embodiment of the present invention.

The system I comprises itinerary determination means 110 adapted to providing information about the vehicle's itinerary.

Said itinerary determination means 110 comprises location determination means 112 for determining the vehicle's location along its itinerary, which location determination means comprises a geographical location determination system, i.e. GPS.

Said itinerary determination means 110 further comprises topography determination means 114 for determining the topography along the vehicle's itinerary where there are hills.

The topography determination means 114 comprises map data about the topography along the vehicle's itinerary. Said location determination means 112 and said topography determination means 114 are arranged to cooperate. In one embodiment they take the form of a combined unit.

Said itinerary determination means 110 comprises according to an embodiment itinerary gradient determination means 116 for determining the road gradients along the vehicle's itinerary.

Said itinerary determination means 110 comprises according to an embodiment hill length determination means 118 for determining the length of hills along the vehicle's itinerary.

The system I further comprises road state determination means 120 for assessment of operability conditions along the vehicle's itinerary.

Said road state determination means 120 comprises friction determination means 122 for determining friction between carriageway and vehicle, i.e. friction between the vehicle's powered wheels and the carriageway. Said friction determination means may take the form of any suitable means for determining friction between powered wheels and carriageway.

Said road state determination means 120 further comprises road state communication means 124 for receiving external information about road state along the vehicle's itinerary, including road state on and close to hills, which information is for example obtained from similar vehicles which have travelled along the vehicle's itinerary within a certain predetermined amount of time before the vehicle. Said road state communication means 124 comprises accordingly communication means for communicating with other vehicles and/or other units. Said road state communication means is thus adapted to receiving friction estimates from other vehicles. It thus comprises information about current friction. It is further adapted to communicating current friction information to, for example, other vehicles or other units. This makes it possible for the friction value to be shared through a portal so that information about current friction close to hills along the vehicle's itinerary for specific types of vehicles is available to similar vehicles so that suitable measures can be adopted to improve the vehicle's operability for travelling up and/or down the respective hill.

Said road state determination means 120 further comprises temperature determination means 126 for determining ambient temperature and/or carriageway temperature. Information about ambient temperature and/or carriageway temperature provides indications about the risk of slipperiness, e.g. on winter surfaces, making it possible to adopt suitable measures for improving the vehicle's operability up and/or down the respective hill.

The system I further comprises vehicle determination means 130 for determining vehicle parameters which affect the vehicle's operability.

Said vehicle determination means 130 comprises vehicle weight determination means 132 for determining the vehicle's weight. Said vehicle weight determination means 132 comprises suitable weight monitoring means for determining the vehicle's weight and thus being able to monitor whether the vehicle is laden or unladen, its load distribution and other weight-related parameters which affect its operability. This makes it possible to adopt suitable measures regarding the vehicle's weight in order to improve its operability up and/or down the respective hill.

Said vehicle determination means 130 further comprises axle pressure determination means 134 for determining driveshaft pressures of the vehicle. Said axle pressure determination means 134 comprises any suitable means for driveshaft pressure monitoring, making it possible on the basis of driveshaft pressure to adopt suitable measures for improving the vehicle's operability up and/or down the respective hill, one such measure possibly being to increase the driveshaft pressure.

Said vehicle determination means 130 comprises torque determination means 136 for determining the vehicle's torque. Said torque determination means 136 may take the form of any suitable monitoring means for determining the vehicle's torque, making it possible to adopt suitable measures for improving the vehicle's operability up and/or down the respective hill, e.g. adaptation of its gears.

Said vehicle determination means 130 further comprises speed determination means 138 for determining the vehicle's speed. Said speed determination means 138 may take the form of any suitable speed detection means such as the vehicle's speedometer, making it possible to adopt suitable measures for improving the vehicle's operability on the respective hill, e.g. by increasing speed before a climb and reducing speed before a downhill run.

The system I further comprises operability improvement means 140 for improving the vehicle's operability, e.g. when negotiating hills with slippery road surfaces.

In an embodiment where the vehicle has tag wheels, said operability improvement means 140 comprises load transfer means 142 for transferring load from tag axle to driveshaft.

Said operability improvement means 140 further comprises differential lock means 144 for locking of differentials for improved operability, e.g. on hills with slippery road surfaces.

Said operability improvement means 140 further comprises gearing adaptation means 146 for adapting the vehicle's gearing in order to increase operability, e.g. on hills with slippery road surfaces.

Said operability improvement means 140 further comprises operability assessment means 148 adapted to assessing whether the vehicle can negotiate hills with slippery road surfaces, making it possible for the driver to be informed, e.g. via a display, that the vehicle cannot climb an impending hill, making it possible for the vehicle to wait for skid control or take an alternative road which is negotiable.

The system I comprises an electronic control unit 100.

The electronic control unit 100 is signal-connected via links to said itinerary determination means 110 which is adapted to providing information about the vehicle's itinerary. The electronic control unit is adapted to receiving from said itinerary determination means via the links a signal which represents itinerary data.

The electronic control unit 100 is signal-connected via a link to said location determination means 112 which is adapted to providing information about the vehicle's location along the itinerary. The electronic control unit is adapted to receiving from said location determination means via the link a signal which represents vehicle location data.

The electronic control unit 100 is signal-connected via a link to said topography determination means 114 which is adapted to providing information about topography, i.e. altitude differences in the form of hills, along the vehicle's itinerary. The electronic control unit is adapted to receiving from said topography determination means via the link a signal which represents topography data.

The electronic control unit 100 is signal-connected via a link to said itinerary gradient determination means 116 which is adapted to providing information about gradients of the carriageway along the vehicle's itinerary. The electronic control unit is adapted to receiving from said itinerary gradient determination means via the link a signal which represents road gradient data.

The electronic control unit 100 is signal-connected via a link to said hill length determination means 118 which is adapted to providing information about the length of hills along the vehicle's itinerary. The electronic control unit is adapted to receiving from said hill length determination means via the link a signal which represents hill length data.

The electronic control unit 100 is signal-connected via links to said road state determination means 120 which is adapted to providing information about road state. The electronic control unit is adapted to receiving from said road state determination means via the links a signal which represents road state data.

The electronic control unit 100 is signal-connected via a link to said friction determination means 122 which is adapted to monitoring friction between powered wheels of the vehicle and carriageway. The electronic control unit is adapted to receiving from said friction determination means via the link a signal which represents friction data.

The electronic control unit 100 is signal-connected via a link to said road state communication means 124 which is adapted to receiving external information about road state, including current friction. The electronic control unit is adapted to receiving from said road state communication means via the link a signal which represents road state information data.

The electronic control unit 100 is signal-connected via a link to said temperature determination means 126 which is adapted to monitoring ambient temperature and/or carriageway temperature. The electronic control unit is adapted to receiving from said temperature determination means via the link a signal which represents temperature data.

The electronic control unit 100 is signal-connected via links to said vehicle determination means 130 which is adapted to providing information about vehicle parameters which affect the vehicle's operability. The electronic control unit is adapted to receiving from said vehicle determination means via the links a signal which represents vehicle determination data.

The electronic control unit 100 is signal-connected via a link to said vehicle weight determination means 132 which is adapted to determining the vehicle's current weight. The electronic control unit is adapted to receiving from said vehicle weight determination means via the link a signal which represents vehicle weight data.

The electronic control unit 100 is signal-connected via a link to said axle pressure determination means 134 which is adapted to determining the vehicle's current driveshaft pressure. The electronic control unit is adapted to receiving from said axle pressure determination means via the link a signal which represents axle pressure data.

The electronic control unit 100 is signal-connected via a link to said torque determination means 136 which is adapted to determining the vehicle's current torque. The electronic control unit is adapted to receiving from said torque determination means via the link a signal which represents torque data.

The electronic control unit 100 is signal-connected via a link to said speed determination means 138 which is adapted to determining the vehicle's current speed. The electronic control unit is adapted to receiving from said speed determination means via the link a signal which represents vehicle speed data.

The electronic control unit 100 is signal-connected via links to said operability improvement means 140 which is adapted to improving the vehicle's operability, e.g. when negotiating hills with slippery road surfaces,. The electronic control unit is adapted to sending to said operability improvement means via the links a signal which represents activation data for activation of said operability improvement means.

The electronic control unit 100 is signal-connected via a link to said load transfer means 142 which is adapted to transferring load from tag axle to driveshaft. The electronic control unit is adapted to sending to said load transfer means via the link a signal which represents load transfer activation data for activation of said load transfer means.

The electronic control unit 100 is signal-connected via a link to said differential lock means 144 which is adapted to locking differentials of the vehicle. The electronic control unit is adapted to sending to said differential lock means via the link a signal which represents differential lock activation data for activation of said differential lock means.

The electronic control unit 100 is signal-connected via a link to said gearing adaptation means 146 which is adapted to altering the vehicle's gear position. The electronic control unit is adapted to sending to said gearing adaptation means via the link a signal which represents gearing adaptation data.

The electronic control unit 100 is signal-connected via a link to said operability assessment means 148 which is adapted to altering the vehicle's gear position. The electronic control unit is adapted to sending to said operability assessment means via the link a signal which represents operability assessment data, e.g. so that the driver is informed that the vehicle cannot negotiate the respective hill or that it is prevented from doing so.

The electronic control unit 100 is adapted to processing said itinerary data to provide information about the itinerary and the vehicle's location. It is adapted to processing said location data, topography data, road gradient data and hill length data to provide information about the itinerary and the topography, i.e. hills and their gradient and length, and the vehicle's location relative to the respective hill along its itinerary. Said itinerary data comprise said location data and topography data and, where applicable, said road gradient data and/or hill length data.

The electronic control unit 100 is adapted to processing said road state data to provide information about the state of the itinerary. It is adapted to processing said friction data, road state information data and temperature data to provide information about the state of the itinerary and the vehicle's operability. Said road state data comprise said friction data, road state information data and/or temperature data.

The electronic control unit 100 is adapted to processing said vehicle determination data to provide information about requirements for the vehicle's operability along the carriageway. It is adapted to processing said vehicle weight data, driveshaft pressure data, torque data and vehicle speed data to provide information about requirements for the vehicle's operability along the carriageway. Said vehicle determination data comprise said vehicle weight data, driveshaft pressure data, torque data and/or vehicle speed data.

The electronic control unit 100 is adapted to using said itinerary data, road state data and vehicle determination data as a basis for determining operability data. It is adapted to comparing said operability data determined with predetermined operability data to arrive at a basis for suitable measures for improved operability of the vehicle in the current situation, i.e. on the respective hill.

The electronic control unit 100 is adapted to using said comparison as a basis for sending to said operability improvement means 140 a signal which represents activation data for activating said operability improvement means in order to improve the vehicle's operability, e.g. for travelling up and/or down the respective hill, and/or to redirect the vehicle to an itinerary which makes the journey easier.

If said operability data fulfil a first operability criterion, the electronic control unit 100 is adapted to sending to said load transfer means 142 a signal to activate it in order to make it possible/easier for the vehicle to climb an impending hill on its itinerary.

If said operability data fulfil a second operability criterion, the electronic control unit 100 is adapted to sending to said differential lock means 144 a signal to activate it in order to make it possible/easier for the vehicle to climb an impending hill on its itinerary.

If said operability data fulfil a third operability criterion, the electronic control unit 100 is adapted to sending to said gearing adaptation means 146 a signal to activate it in order to make it possible/easier for the vehicle to climb an impending hill on its itinerary.

If said operability data fulfil a fourth operability criterion, the electronic control unit is adapted to sending to said operability assessment means 148 a signal to send information that in prevailing circumstances with regard inter alia to road conditions the vehicle cannot climb an impending hill on its itinerary, and/or to prevent its attempting to do so.

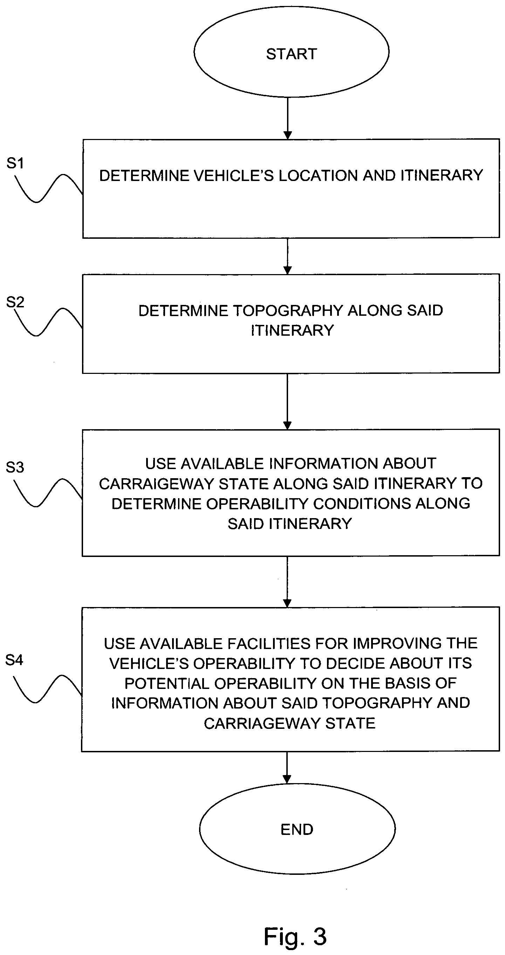

Fig. 3 is a schematic block diagram of a method for improving the operability of a motor vehicle according to an embodiment of the present invention.

In one embodiment the method for improving the operability of a motor vehicle comprises a first step S1 in which the vehicle's location and itinerary are determined.

In one embodiment the method for improving the operability of a motor vehicle comprises a second step S2 in which the topography along said itinerary is determined, thereby providing information about hills along it.

In one embodiment the method for improving the operability of a motor vehicle comprises a third step S3 in which available information about carriageway state along said itinerary is used to assess operability conditions along it.

In one embodiment the method for improving the operability of a motor vehicle comprises a fourth step S4 in which available facilities for improving the vehicle's operability are used to determine its potential operability on the basis of information about said topography and carriageway state.

The above description of the preferred embodiments of the present invention is provided for illustrative and descriptive purposes. It is not intended to be exhaustive, nor to restrict the invention to the variants described. Many modifications and variations will obviously suggest themselves to one skilled in the art. The embodiments were chosen and described in order best to explain the principles of the invention and the practical applications thereof and thereby make it possible for one skilled in the art to understand the invention for different embodiments and with the various modifications appropriate to the intended use.

## Claims

1. A method for improving the operability of a motor vehicle (1) to make it possible to reduce risk of its becoming stuck on a hill, comprising the steps of:
- determining (S1) the vehicle's location and itinerary (R);
- determining (S2) the topography along said itinerary (R),
**characterised by** the steps of:
- using (S3) available information about carriageway state along said itinerary (R) to assess operability conditions on a hill to be driven on along said itinerary (R);
- using available facilities for improving (S4) the vehicle's operability to decide about its potential operability on the hill on the basis of information about said topography and carriageway state and whereby said available facilities for improving the vehicle's operability on the hill comprise measures for improving the friction at its contact with the carriageway before the vehicle reaches the hill and whereby said measures for improving the friction at the vehicle's contact with the carriageway comprise one or more of the following: load redistribution, differential locking, gearing adaptation of the vehicle's propulsion.

2. A method according to claim 1, such that said information about said carriageway state comprises parameters which affect friction at the vehicle's contact with the carriageway.

3. A method according to any one of claims 1-2, such that said information about said topography comprises gradients of the carriageway along the vehicle's itinerary and/or the length of sloping portions of the carriageway along the vehicle's itinerary.

4. A system (I) for improving the operability of a motor vehicle (1) to make it possible to reduce risk of its becoming stuck on a hill, comprising means (100, 112) for determining the vehicle's location and itinerary (R); means (100, 114) for determining the topography along said itinerary (R), **characterised**
**by** means (100) for using available information about carriageway state along said itinerary (R) to assess operability conditions on a hill to be driven on along said itinerary (R); means (140) for using available facilities for improving the vehicle's operability on the hill to decide about its potential operability on the basis of information about said topography and carriageway state and whereby said available facilities for improving the vehicle's operability on the hill comprise means (142, 144, 146) for improving the friction at its contact with the carriageway before the vehicle reaches the hill and whereby said means for improving the friction at the vehicle's contact with the carriageway comprise one or more of the following: load transfer means (142), differential lock means (144), means (146) for gearing adaptation of the vehicle's propulsion.

5. A system (I) according to claim 4, such that said information about said carriageway state comprises parameters which affect friction at the vehicle's contact with the carriageway.

6. A system (I) according to any one of claims 4-5, such that said information about said topography comprises gradients (α) of the carriageway along the vehicle's itinerary (R) and/or the length (L) of sloping portions of the carriageway along the vehicle's itinerary.

7. A motor vehicle (1) provided with a system according to any one of claims 4-6.

## Patentansprüche

1. Verfahren zur Verbesserung der Funktionsfähigkeit eines Kraftfahrzeugs (1), um es zu ermöglichen, die Gefahr seines Steckenbleibens an einer Steigung zu verringern, umfassend die Schritte:
- Bestimmen (S1) des Standortes und der Fahrtroute (R) des Fahrzeugs,
- Ermitteln (S2) der Topographie entlang der Fahrtroute (R),
**gekennzeichnet durch** die Schritte:
- Verwenden (S3) verfügbarer Information über einen Fahrbahnzustand entlang der Fahrtroute (R), um Funktionsfähigkeitsbedingungen an einer entlang der Fahrtroute (R) zu befahrenden Steigung zu beurteilen,
- Verwenden verfügbarer Einrichtungen zum Verbessern (S4) der Fahrzeugfunktionsfähigkeit, um eine Entscheidung über seine potentielle Funktionsfähigkeit an der Steigung auf der Basis von Information über die Topographie und den Fahrbahnzustand zu treffen, wobei die verfügbaren Einrichtungen zum Verbessern der Fahrzeugfunktionsfähigkeit an der Steigung Maßnahmen zum Verbessern der Reibung an seiner Berührstelle mit der Fahrbahn umfasst, bevor das Fahrzeug die Steigung erreicht, und wobei die Maßnahmen zum Verbessern der Reibung an der Berührstelle des Fahrzeugs mit der Fahrbahn eine oder mehrere der folgenden umfassen: Ladungsumverteilung, Sperren eines Differenzials, Gangstufenanpassung des Fahrzeugantriebs.

2. Verfahren nach Anspruch 1, wobei die Information über den Fahrbahnzustand Parameter umfasst, die eine Reibung an der Berührstelle des Fahrzeugs mit der Fahrbahn beeinflussen.

3. Verfahren nach einem der Ansprüche 1 bis 2, wobei die Information über die Topographie Gradienten der Fahrbahn entlang der Fahrtroute des Fahrzeugs und/oder die Länge geneigter Anteile der Fahrbahn entlang der Fahrtroute des Fahrzeugs umfassen.

4. System (I) zur Verbesserung der Funktionsfähigkeit eines Kraftfahrzeugs (1), um es zu ermöglichen, die Gefahr seines Steckenbleibens an einer Steigung zu verringern, mit
einer Einrichtung (100, 112) zur Bestimmung des Standorts und der Fahrtroute (R) des Fahrzeugs,
einer Einrichtung (100, 114) zur Ermittlung der Topographie entlang der Fahrtroute (R),
**gekennzeichnet durch**
eine Einrichtung (100) zur Verwendung verfügbarer Information über einen Fahrbahnzustand entlang der Fahrtroute (R), um Funktionsfähigkeitsbedingungen an einer entlang der Fahrtroute (R) zu befahrenden Steigung zu beurteilen,
eine Einrichtung (140) zur Verwendung verfügbarer Einrichtungen zum Verbessern der Fahrzeugfunktionsfähigkeit an der Steigung, um eine Entscheidung über seine potentielle Funktionsfähigkeit auf der Basis von Information über die Topographie und den Fahrbahnzustand zu treffen, wobei die verfügbaren Einrichtungen zum Verbessern der Fahrzeugfunktionsfähigkeit an der Steigung Mittel (142, 144, 146) zum Verbessern der Reibung an seiner Berührstelle mit der Fahrbahn umfassen, bevor das Fahrzeug die Steigung erreicht, und wobei die Mittel zum Verbessern der Reibung an der Berührstelle des Fahrzeugs mit der Fahrbahn eines oder mehreres aus dem folgenden umfassen: Ladungsumverteilungsmittel (142), Differenzialsperrungsmittel (144), Mittel (146) zur Gangstufenanpassung des Fahrzeugantriebs.

5. System (I) nach Anspruch 4, wobei die Information über den Fahrbahnzustand Parameter umfasst, die eine Reibung an der Berührstelle des Fahrzeugs mit der Fahrbahn beeinflussen.

6. System (I) nach einem der Ansprüche 4 bis 5, wobei die Information über die Topographie Gradienten (α) der Fahrbahn entlang der Fahrtroute (R) des Fahrzeugs und/oder die Länge (L) geneigter Anteile der Fahrbahn entlang der Fahrroute des Fahrzeugs umfassen.

7. Kraftfahrzeug (1), das mit einem System nach einem der Ansprüche 4 bis 6 ausgestattet ist.

## Revendications

1. Procédé pour l'amélioration de l'opérabilité d'un véhicule motorisé (1) pour permettre de réduire le risque qu'il se coince sur une colline, comprenant les étapes de :
- la détermination (S1) de l'emplacement et de l'itinéraire (R) du véhicule ;
- la détermination (S2) de la topographie le long dudit itinéraire (R),
**caractérisé par** les étapes de :
- l'utilisation (S3) d'informations disponibles sur l'état de la chaussée le long dudit itinéraire (R) pour évaluer les conditions d'opérabilité sur une colline à conduire le long dudit itinéraire (R) ;
- l'utilisation d'installations disponibles pour l'amélioration (S4) de l'opérabilité du véhicule pour décider à propos de son opérabilité potentielle sur la colline sur la base d'informations à propos de ladite topographie et de l'état de la chaussée et par lesquelles lesdites installations disponibles pour l'amélioration de l'opérabilité du véhicule sur la colline comprennent des mesures pour l'amélioration de la friction à son contact avec la chaussée avant que le véhicule n'atteigne la colline et par lesquelles lesdites mesures pour l'amélioration de la friction au contact du véhicule avec la chaussée comprennent un ou plusieurs parmi de qui suit : redistribution de charge, blocage du différentiel, adaptation de la transmission de la propulsion du véhicule.

2. Procédé selon la revendication 1, de sorte que lesdites informations à propos dudit état de la chaussée comprennent des paramètres qui affectent la friction au niveau du contact du véhicule avec la chaussée.

3. Procédé selon l'une quelconque des revendications 1-2, de sorte que lesdites informations à propos de ladite topographie comprennent des gradients de la chaussée le long de l'itinéraire du véhicule et/ ou la longueur des parties inclinées de la chaussée le long de l'itinéraire du véhicule.

4. Système (I) pour l'amélioration de l'opérabilité d'un véhicule motorisé (1) afin de permettre de réduire le risque qu'il se coince sur une colline, comprenant des moyens (100, 112) pour la détermination de l'emplacement et de l'itinéraire du véhicule (R) ;
des moyens (100, 114) pour la détermination de la topographie le long dudit itinéraire (R),
**caractérisé par** des moyens (100) pour l'utilisation d'informations disponibles à propos de l'état de la chaussée le long dudit itinéraire (R) pour évaluer les conditions d'opérabilité sur une colline à conduire le long dudit itinéraire (R) ; des moyens (140) pour l'utilisation des installations disponibles pour l'amélioration de l'opérabilité du véhicule sur la colline pour décider à propos de son opérabilité potentielle sur la base d'informations à propos de ladite topographie et de l'état de la chaussée et par lesquelles lesdites installations disponibles pour l'amélioration de l'opérabilité du véhicule sur la colline comprennent des moyens (142, 144, 146) pour l'amélioration de la friction à son contact avec la chaussée avant que le véhicule n'atteigne la colline et par lesquelles lesdits moyens pour l'amélioration de la friction au contact du véhicule avec la chaussée comprennent un ou plusieurs parmi de qui suit : des moyens de redistribution de charge (142), des moyens de blocage du différentiel (144), des moyens (146) pour l'adaptation de la transmission de la propulsion du véhicule.

5. Système (I) selon la revendication 4, de sorte que lesdites informations sur ledit état de la chaussée comprennent des paramètres qui affectent la friction au niveau du contact du véhicule avec la chaussée.

6. Système (I) selon l'une quelconque des revendications 4-5, de sorte que lesdites informations à propos de ladite topographie comprennent des gradients (a) de la chaussée le long de l'itinéraire du véhicule (R) et/ ou la longueur (L) de parties inclinées de la chaussée le long de l'itinéraire du véhicule.

7. Véhicule motorisé (1) fourni avec un système selon l'une quelconque des revendications 4-6.
